# EUROPEAN PATENT SPECIFICATION

(11) **EP 1 204 066 B1**
(45) Date of publication and mention of the grant of the patent: **09.02.2005**
(21) Application number: 02001441.1
(22) Date of filing: 24.08.1994
(51) Int. Cl.: G06K 17/00, H04M 1/2755, G06K 7/10

(54) **Remote controller and telephone incorporating bar code reading facilities**
Fernsteueranordnung und Telefon mit Mitteln zum Lesen von Balkenkoden
Télécommande et téléphone incorporant des moyens de lecture de code à barre

(30) Priority: 25.08.1993 US 111531; 26.07.1994 US 273180
(43) Date of publication of application: 08.05.2002
(62) Divisional of application: 94113239.1
(73) Proprietor: SYMBOL TECHNOLOGIES, INC., Holtsville, New York 11742-1300 (US)
(72) Inventor: White, Jay P., Bohemia, NY 11716 (US); Stern, Miklos Symbol Technologies INC, Holtsville, NY 11742-1300 (US); Barkan, Edward, Miller Place, NY 11764 (US)
(74) Representative: Wagner, Karl H., Dipl.-Ing.

(56) References cited:
- WO-A-92/19064
- DE-A- 3 741 788
- DE-A- 3 814 728
- PATENT ABSTRACTS OF JAPAN vol. 017, no. 352 (M-1439), 5 July 1993 (1993-07-05) & JP 05 050738 A (DAINIPPON PRINTING CO LTD), 2 March 1993 (1993-03-02)

## Description

This invention relates to a method of using a communication system for transmitting bar code information by a telephone system to an automated mail-order system. The telephone system comprises a telephone set having a built-in scanner assembly for reading and transmitting data pertaining to bar codes.

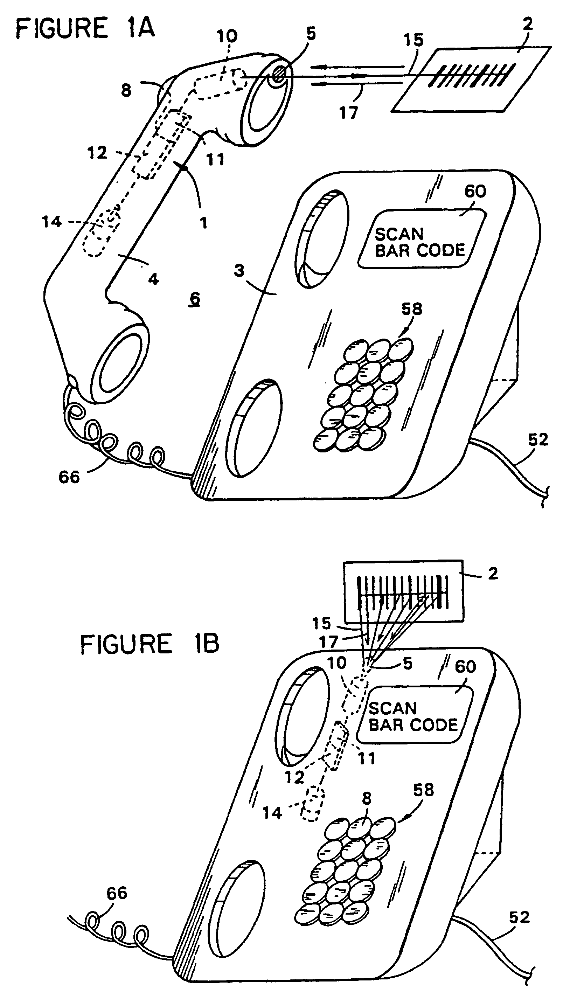

Optically encoded information, such as far codes, is common. As illustrated in Figures 1A, 1B a bar code symbol 2 consists of a series of light and dark regions, typically in the form of rectangles. The widths of the dark regions, the bars, and/or the widths of the light spaces between the bars indicate the encoded information. A specified number and arrangement of these elements represent a character. Standardized encoding schemes specify the arrangements for each character, the acceptable widths and spacings of the elements, the number of characters a symbol may contain or whether symbol length is variable, etc. The known symbologies include, for example, UPC/EAN, Code 128, Codabar, and Interleaved 2 of 5.

To decode a bar code symbol and extract a legitimate message, a bar code reader illuminates the bar code and senses the light reflected therefrom to detect the widths and spacings of the bar code and produces an electrical signal corresponding to the scanned bar code. This electrical signal is decoded to provide multiple alphanumerical characters which are descriptive of the article to which the bar code is attached or to some characteristic thereof. Such characters are typically represented in digital form as an input to a data processing system for applications in point-of-sale processing, inventory control, and the like.

There are several different types of bar code readers. A first type, a wand, contains an emitter and a detector, and the user manually moves the wand across the bar code. A detector senses the light reflected from a spot scanned by the wand across the bar code, and produces an electrical signal representing the encoded information. Wands have been disclosed, for example, in U.S. Patent Nos. 4,654,482, 4,907,264 and 4,937,853.

Another type of bar code reader is an optical scanner. The optical scanner is implemented as a gun-shaped device, having a pistol-grip type handle. A lightweight plastic housing contains a laser light source, a detector, optics and signal processing circuitry and a decoder, as well as a battery or other power source. A light-transmissive window in the front end of the housing allows outgoing light beam to exit and incoming reflected light to enter. Optical scanners have been disclosed, for example, in U.S. Patent Nos. 4,251,798; 4,360,798; 4,369,361; 4,387,297; 4,409,470 and 4,460,120, all of which have been assigned to Symbol Technologies, Inc., the assignee of this application.

Bar codes having become common, some telephone systems have incorporated bar code readers, such as disclosed in U.S. Patent Nos. 4,503,288, 4,654,482, 4,907,264, 4,937,853, 4,947,028 and 4,975,948 and DE 30 11 511. For example, in U.S. Patent Nos. 4,654,482, and 4,947,028, a bar code reader is attached to a telephone system for merchandise ordering and/or payment. Because the bar code reader and telephone set are separate, prior art telephone systems require more desktop "real estate," i.e, more space, compared to a telephone system that could incorporate the bar code reader in the telephone set. Thus, DE 30 11 511 to Thies and U.S. Patent No. 4,907,264 to Seiler et al., for example, disclose a reading wand incorporated into a handset for dialling a telephone number after reading a bar coded telephone number. However, because the handset is bulky and cumbersome, the user has difficulty in moving the want of the handset across a bar code in order to accurately read the bar code. Further, Thies and Seiler et al. usethe wand only for dialling a telephone number and hence, is not useful in telephone systems requiring bar code readers for reading bar codes representing other than telephone numbers and transmitting the decoded bar code information over the telephone line.

PATENT ABSTRACTS OF JAPAN vol. 017, no. 352 (M-1439), 5 July 1993 (1993-07-05) & JP 05 050738 A (DAINIPPON PRINTING CO LTD), 2 March 1993 (1993-03-02) disclose an automated mail-order system comprising a bar code reader and a telephone. The bar code reader comprises an elongate light source and a linear sensor array. In operation, a bar code is read from a pamphlet using the bar code reader and the bar code data are transferred to the telephone. Thereafter, the bar code data are sent via a telephone line to the mail-order system.

JP-A-63 275 250 discloses a telephone comprising a base portion and a handset. The handset comprises a built-in bar code reader for reading bar codes. To read a bar code the user must swipe the handset across the bar code.

According to the present invention there is provided a method of using a communication system as defined by claim 1.

The invention will be described in detail with reference to the following drawings in which like reference numerals refer to like elements wherein:
Figure 1A illustrates a telephone handset incorporating an optical scanner;
Figure 1B illustrates a telephone base incorporating an optical scanner, but does not fall within the scope of the method according to the invention;
Figure 2 illustrates in detail a scan module of an optical scanner depicted in Figures 1A and 1B;
Figure 3 is a block diagram of the telephone set having an optical scanner;
Figure 4 illustrates the optical scanner incorporated into a handset of a cordless telephone;
Figure 5 is a flow chart illustrating the sequence for auto-dialling;
Figure 6 illustrates a communication system for transmitting decoded bar code information by a telephone system to a mail-order system;
Figure 7 illustrates bar coded information of a catalog being scanned by an optical scanner in a handset;
Figure 8 is a flow chart illustrating the sequence for automated mail-ordering of items in the catalogue of Figure 7 over the communication system of Figure 6.
Figure 9A shows a portable remote controller which does not fall within the scope of the method according to the invention;
Figure 9B shows another portable remote controller;
Figure 10A shows a magazine from which items may be ordered;
Figure 10B shows an alternative to the magazine of Figure 10A; and
Figure 11 is a block diagram illustrating in more detail the portable remote controllers of Figures 9A and 9B.

### Telephone-based embodiments

Figure 1A is a schematic drawing of a handset 4 of a telephone set 6 having a handset-implemented scanner 1 (various components of the telephone have been omitted for simplicity). The handset 4 is designed to be aimed at a bar code symbol 2 by a user from a position in which the optical scanner 1 is spaced from the bar code symbol, i.e., the scanner does not contact the bar code symbol 2 and is not manually moved across the symbol. The handset 4 has a trigger 8 to activate a light beam from a scan module 10, and a light-transmissive window 5 allows the light beam 15 to exit from the handset 4. The light beam is reflected off the bar code 2, and the reflected light 17 re-enters through the light-transmissive window 5. The scan module 10 detects the reflected light 17 and produces an electrical signal proportional to the intensity of the reflected light.

A digitizer 11, associated with or included in the scanner, processes the electrical signal to produce a pulse signal, where the widths and spacings between the pulses correspond to the widths of the bars and the spacings between the bars. The digitizer serves as an edge detector or wave shaper circuit, and the threshold value set by the digitizer determines what points of the electrical signal represent bar edges. The pulse signal from the digitizer is applied to the decoder 12. The various decoder functions are performed by a CPU with associated program memory and random access data memory.

The decoder 12 determines the pulse widths and spacings of the signal from the digitizer. The decoder 12 then analyzes the widths and spacings and decodes a legitimate bar code message that includes an analysis to recognize legitimate characters and sequences, as defined by the appropriate code standard. This may also include an initial recognition of the particular standard encoding scheme. This recognition of the standard is typically referred to as auto-discrimination.

Figure 1B is a schematic drawing of a telephone base of a telephone set 6 having a telephone base-implemented scanner 1 (again, various components of the telephone have been omitted for simplicity). The telephone set of Figure 1B does not fall within the scope of the method according to the invention. The telephone base-implemented scanner 1 has the same components as the handset-implemented scanner. To read a bar code, the user brings the bar code symbol 2 in the vicinity of the light transmissive window 5 of the telephone base 3 and activates a trigger 8 such as a push button on a keypad 58 of the telephone base to read the bar code.

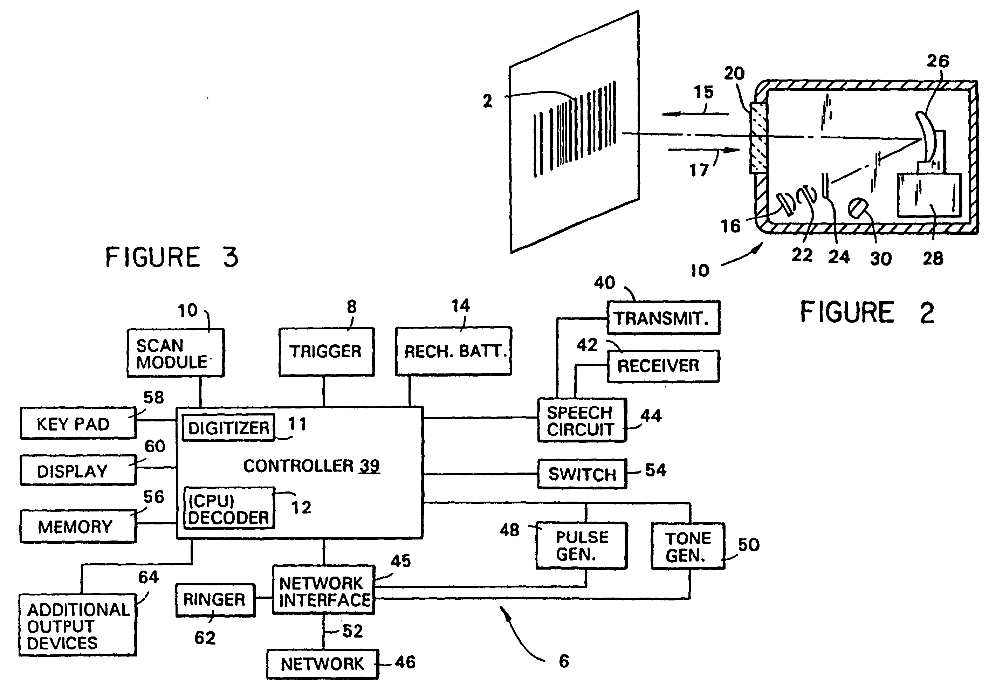

Figure 2 illustrates in more detail the scan module 10 of an optical scanner depicted in Figures 1A and 1B. The scan module 10 contains light source, mirrors, scanning motor and detector positioned in the module housing as shown. To scan a bar code, a laser light source 16 generates a light beam which is optically modified to form a beam spot of a certain size at a working distance. The light beam is directed by optical components along a light path toward the bar code symbol 2 located in the vicinity of the working distance for reflection from the bar code symbol 2. A lens 22 (or multiple lens system) may be used to focus the scanning beam into a scanning spot at an appropriate reference plane.

The laser light source 16, such as a semiconductor laser diode, introduces a light beam into the axis of the lens 22, and the beam passes through a partially-silvered mirror 24 and other lenses or beam-shaping structure as needed. The light beam is reflected from an oscillating mirror 26 which is coupled to a scanning motor 28 energized when the trigger 8 is pulled. The oscillation of the mirror 26 causes the outgoing light beam 15 to scan back and forth in a desired pattern. Alternatively, the laser light source 16 can be oscillated to cause the outgoing light beam 15 to scan.

A variety of mirror and motor configurations can be used to move the beam in a desired scanning pattern. For example, U.S. Patent No. 4,251,798 discloses a rotating polygon having a planar mirror at each side, each mirror tracing a scan line across the symbol. U.S. Patent Nos. 4,387,297 and 4,409,470 employ a planar mirror that is repetitively and reciprocally driven in alternate circumferential directions about a drive shaft on which the mirror is mounted. U.S. Patent No. 4,816,660 discloses a multi-mirror construction composed of a generally concave mirror portion and a generally planar mirror portion. The multi-mirror construction is repetitively and reciprocally driven in alternate circumferential directions about a drive shaft on which the multi-mirror construction is mounted.

The light 17, reflected back by the bar code symbol 2, passes back through a window 20 for application to a detector 30. In the exemplary scan module 10 illustrated in Figures 1A and 1B, the light 17 reflects off the mirror 26 and partially-silvered mirror 24 and impinges on the light sensitive detector 30. The detector 30, such as an optical sensor or a photodetector having a field of view extending across and slightly past the bar code symbol 2, detects light of variable intensity reflected off the bar code symbol 2 and generates electrical signals indicative of the detected light.

Another example of a suitable scan module is disclosed in commonly assigned copending application Serial No. 07/952,414, filed 1992. Further, a scan module, either with or without the digitizer and decoding circuitry, could be formed on a single substrate using appropriate micro-machining techniques, such as described in commonly assigned copending application Serial No. 07/745,776.

For illustrative purposes, the digitizer 11 and the decoder (CPU) 12 are shown as included in a controller 39 in Figure 3. However, as illustrated in Figures 1A and 1B, the digitizer 11 and decoder 12 may be separate from the controller 39. As can be appreciated, the handset 4 can incorporate the scan module 10, the trigger 8, and the rechargeable battery 14, and the telephone base 35 can incorporate the digitizer 11 and the decoder 12 with the controller 39. A transmitter (microphone) 40 and a receiver (speaker) 42 are coupled to a speech circuit 44 for transmission and reception of audio signals. The speech circuit 44 is also coupled to the controller 39 for transmission and reception of communication signals to and from a communication network interface 45 and a communications network 46.

The scan module 10, trigger 8 and rechargeable battery 14 are connected to the controller 39. When the trigger 8 is operated, the controller 39 activates the scan module 10 for reading a bar code. The controller 39 is also coupled to a pulse generator 48 and a tone generator 50 for converting a decoded bar code information to communication signals for transmission on a telephone line 52. A switch 54 is provided for activating one or the other of the pulse and tone generators. The pulse generator 48 causes transmission of the decoded bar code information as dial pulses to the telephone line 52, whereas the tone generator 50 transmits the same information as tones.

A memory 56, which can be any combination of RAMs, ROMs, EPROMs and EEPROMs, is also connected to the controller 39. The memory 56 stores telephone numbers for autodialing as well as the read bar coded information for conversion into communication signals and for transmission to the communications network 46. Alternatively, the controller 39 can bypass the memory 56 and directly transmit the read bar coded information over the telephone line 52. Further, the memory 56 stores the program routines for executing various functions, such as auto-dialing, mail-ordering, making payments, keeping track of sales and inventory, etc.

A keypad 58 provides inputs to the controller 39, and a display 60, in conjunction with a display driver (not shown), displays the status of the telephone set, the optical scanner and various other information. The keypad 58 includes push buttons for manually entering numbers and for auto-dialing. When the auto-dialing push button is pressed, the controller waits for either another manual input of numbers corresponding to a telephone number stored in the memory 56 or electrical signals from the scan module 10 for decoding and dials the appropriate telephone numbers using the pulse generator 48 or the tone generator 50. The display 60 also indicates the number being dialed during auto-dialing.

The keypad 58 further includes enter and cancel push buttons for entering and canceling the decoded bar code information. For example, when the enter push button is pressed, the controller 39 either stores the decoded bar code information in the memory or transmits the decoded bar code information to the telephone line 52 using the pulse or tone generators 48, 50. When the cancel push button is depressed, the controller 39 disregards the electrical signals from the scan module. The display 60 indicates whether the scanned bar code should be entered or cancelled and confirms the entering and cancelling of the scanned bar code.

The display 60 is also used to display various other information. For example, if the telephone set 6 receives an incoming telephone signal, the display, in conjunction with a ringer 62, indicates to the user that there is an incoming call. If the optical scanner 1 is in use when the incoming telephone signal is received, the user can depress a push button on the keypad 58 to disable the optical scanner and answer the telephone call. Alternatively, the controller 39 can automatically switch over to allow the user to answer the telephone call after storing the decoded bar code information in the memory 56 for later use.

In the preferred embodiment of Figure 1A, the scan module 10, the digitizer 11, the decoder 12, the trigger 8 and the rechargeable battery 14 are placed in the handset 4, and the components of the telephone set 6 can be distributed in the handset 4 and the telephone base 3. Further, additional output devices 64 can be coupled to the controller 39.

Typically, the user operates the optical scanner while a cord 66 is attached to handset 4 and the base 3. However, the optical scanner 1 can be used with the cord 66 detached, i.e., portable mode. In this mode, the user detaches the cord 66 from the handset 4 or the telephone base 3, and the rechargeable battery 14 provides power to the components in the handset 4. The user aims the window 5 of the telephone handset 4 at the bar code 2 and depresses the trigger 8 to read the bar code 2. The controller 39 stores the read bar code information in the memory 56 when the controller 39 detects that the cord 66 is detached from the handset 4 or the telephone base 3.

When the cord 66 is reattached to the handset 4 or the telephone base 3, the user depresses a push button on the keypad to begin the transmission of the stored information over the telephone line 52. Alternatively, the controller 39 automatically transmits the stored information when the controller 39 detects the reattachment of the cord 66 to the handset 4 or the telephone base 3.

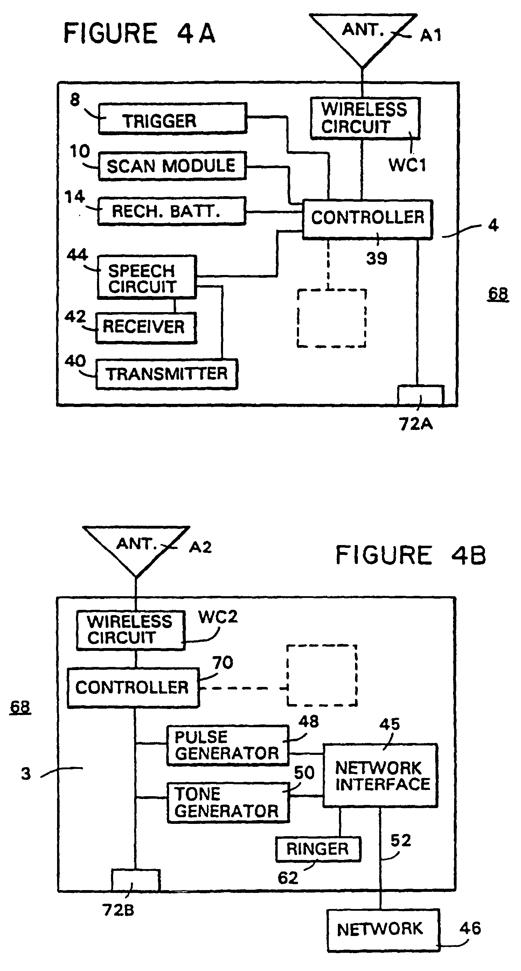

In an alternative embodiment, the optical scanner is incorporated into the handset of a cordless telephone. Cordless telephones are known in the art and are disclosed in, for example in U.S. Patent Nos. 4,481,382, 4,508,935 and 4,661,659. Figure 4 illustrates the optical scanner 1 incorporated in the handset 4 of the cordless telephone 68. Unlike a corded telephone, the cordless telephone 68 includes a wireless circuit WC1 and an antenna A1 in the handset 4 and a wireless circuit WC2 and an antenna A1 in the telephone base 3. Moreover, the telephone base 3 includes the pulse generator 48, the tone generator 50 and a second controller 70. As indicated in dotted lines, the keypad 58, display 60, memory 56, ringer 62 and additional output devices 64 can be incorporated in the handset 4 or the telephone base 3 or both. However, like the preferred embodiment of Figure 1A, the trigger 8, scan module 10, digitizer 11, decoder 12 and rechargeable battery 14 are incorporated in the handset 4 for reading the bar codes.

The optical scanner 1 of the cordless telephone 68 is operated in the same manner as a corded telephone. However, in the cordless telephone 68, the decoded bar code information is transmitted through the wireless circuit WC1 and antenna A1 of the handset 4 to the antenna A2 and wireless circuit WC2 of the telephone base 3 for processing by the controller 70, the pulse or tone generator 48, 50 and the communication network interface 45 to the telephone line 52. The controllers 39 and 70 can bypass the memory either in the handset 4 or the telephone base 3 to transmit the decoded bar code information to the telephone line 52 or can store the decoded bar code information in the memory for transmission onto the telephone line 52 after a predetermined period of time.

Alternatively, when the optical scanner 1 of the handset 4 is used to scan bar codes far from the telephone base and/or when the user wants the controller 39 to enter a store mode, the user can depress a button or the controller enters into a store mode of operation upon detection of weak antenna transmission signals to store the decoded bar code information in the memory. The stored information is transmitted to the telephone base 3 for transmission onto the telephone line 52 when the user depresses a transmit button to allow transmission of the stored information and/or when the controller 39 detects a strong antenna signal. Moreover, prior to the controller 39 terminating the telephone connection, the stored information can be transmitted to the telephone line 52 when the user places the handset 4 into a cradle (not shown) of the telephone base 3 so that there is a direct linkage between the handset 4 and the telephone base 3 through the contacts 72A, 72B.

As can be appreciated, the cordless telephone can be modified to incorporate the optical scanner in a cellular telephone. The cellular telephone may employ radio technology, such as spread spectrum for communication signals, to transmit and receive information. The use of spread spectrum in communications is disclosed in, for example, U.S. Patent Nos. 4,222,115, 4,672,658, 4,888,788, 4,918,707, 4,943,975, 4,964,138, 4,984,247, 5,016,255 and 5,022,047.

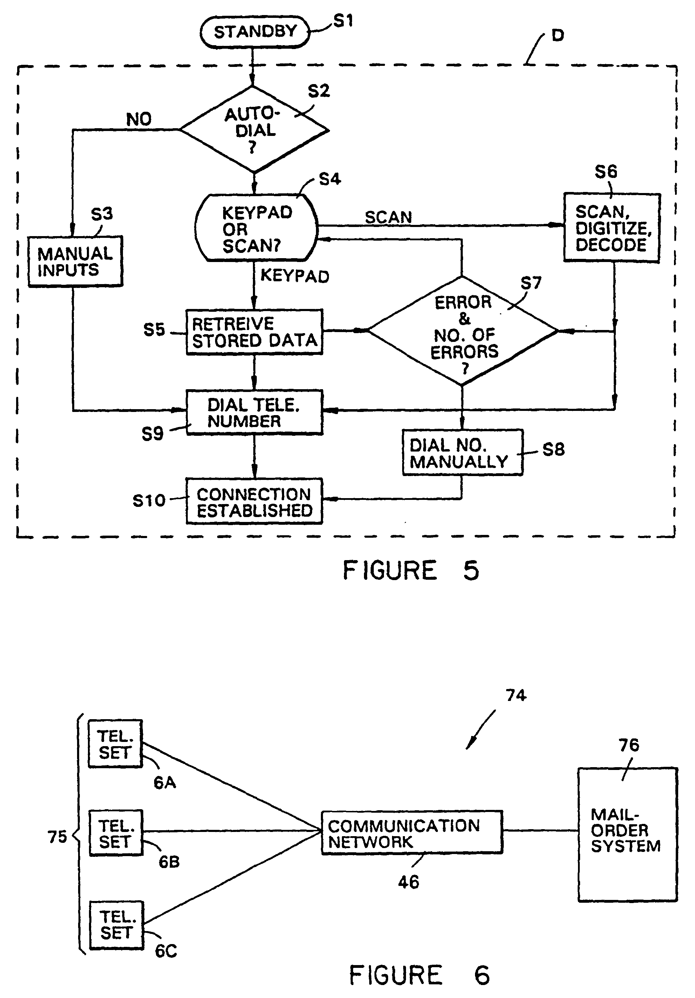

Figure 5 is a flow chart illustrating the sequence for auto-dialing a called party's telephone number by a caller/user. The telephone set is initially set at a standby mode (S1), and the controller waits for an auto-dial button to be depressed (S2). If the caller dials a telephone number instead of the auto-dial button, the controller dials the inputted telephone number (S3) and connection is established (S9, S10). If the auto-dial command is selected by depression of an auto-dial button, the controller waits for the caller/user to either select an appropriate combination of keypad inputs or activate the trigger (S4). When the controller detects keypad inputs, the controller retrieves the pre-stored telephone numbers in the memory for dialing (S5, S9) and establishing connection (S10) between the caller and the called party.

To auto-dial a telephone number using the optical scanner, the caller/user aims the window of the telephone handset at a bar coded telephone number. The bar coded telephone number can be printed on the telephone directory, business cards, credit cards, or any available medium having bar coded telephone numbers. When the caller/user activates the trigger, the bar coded telephone number is scanned and detected by the scan module (S6). The digitizer and decoder, respectively, digitizes and decodes the electrical signals from the scan module for dialing the decoded telephone number (S6, S9) and establishing connection (S10).

If the keypad inputs do not correspond to any pre-stored number, or when an error occurs during the scanning of the bar code, the display indicates an occurrence of the error. The controller instructs the user to re-enter the keypad inputs or re-scan the bar code (S7). The controller also tracks the number of error occurrences, and after a predetermined number of error occurrences, the controller terminates the auto-dial feature to instruct the caller/user to enter the telephone number manually (S8). Alternatively, the caller/user can terminate the auto-dial feature any time and dial the number manually.

Figure 6 illustrates a communication system 74 for transmitting decoded bar code information by a telephone system 75 to a mail-order system 76. The telephone system comprises a plurality of telephone sets 6A-6C (only three are shown for illustrative purposes), and each of the telephone set 6A-6C has an optical scanner 1 built into the telephone handset 4 or base 3. The communications network 46 couples the telephone system 75 and the mail-order system 76.

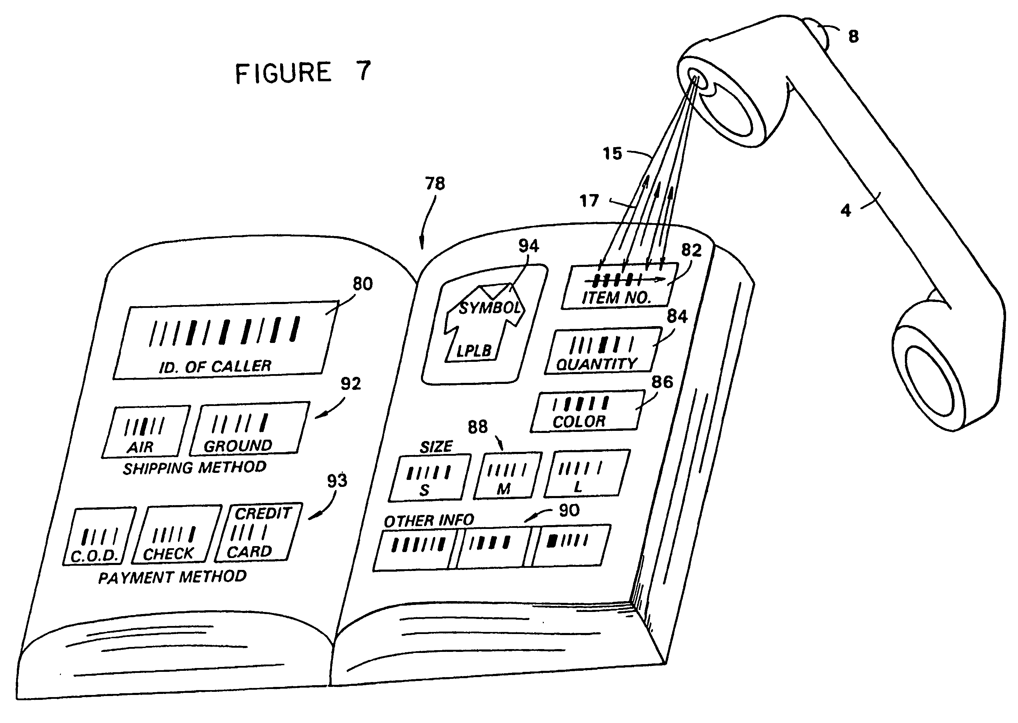

As illustrated in Figure 7, a caller scans bar coded information in a catalog 78 using, for example, the optical scanner 1 incorporated in the handset 4 to order an item 94. The catalog 78 has bar coded information 80 identifying the caller such as name, address and telephone number. Further, the catalog 78 includes bar coded item number 82, quantity 84, color 86, size 88 and other information 90 identify the item. The catalog 78 also includes bar code shipping method 92 and payment method 93.

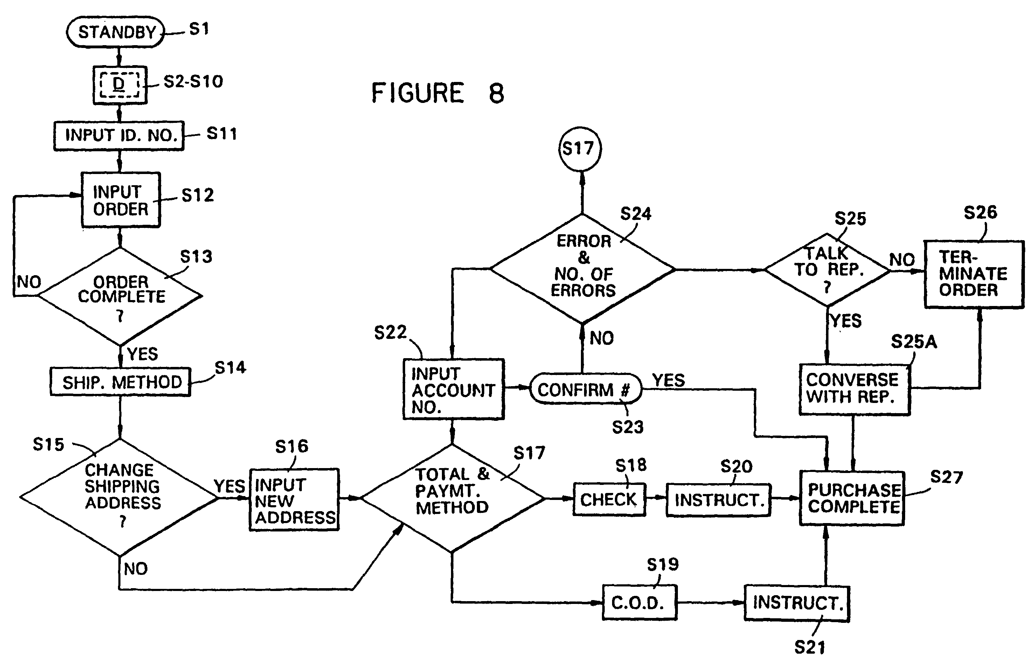

Figure 8 is a flow chart illustrating the sequence for ordering an item using the catalog 78 illustrated in Figure 7 and the telephone set 6A-6C of the telephone system 75 in the communications system 74 illustrated in Figure 6. The telephone is initially set at a stand-by mode (S1). Portion D (dotted lines) of the method illustrated in Figure 5 is used to either manually dial or auto-dial the telephone number of the mail-order company. For auto-dialing, the caller/user can scan the bar coded telephone number on the catalog to establish connection with the automated mail-ordering system of the mail-order company.

When connection is established, the automated system instructs the caller/user to enter his/or her bar coded identification 80 identifying the caller's name, address, telephone number and other information printed on the catalog 78 (S11). Such information may be also printed on a driver's license, business card, etc. The mail-order system 76 then instructs the caller/user to scan the bar coded item number 82, quantity 84, color 86, size 88 and other information 90 identifying the item on the catalog (S12).

After the decoded bar code information is received, the mail-order system 76 instructs whether the order is complete (S13). If the caller/user desires to order another item, the caller/user scans the bar coded information of other items (S12), and the sequence is repeated until the caller/user indicates to the automated system that the order is complete. Thereafter, the automated system instructs the caller/user to enter the bar coded shipping method 92, e.g., air or ground, (S14) and asks whether the shipping address is the same as the user identification information (S15). If not, the automated system instructs either to manually enter the shipping address or scan a bar coded shipping address (S16).

Thereafter, the automated computer transmits the total amount of the purchase and instructs the caller/user to scan the bar coded payment method 93 on the catalog 78 (S17). If the user scans either payment by check (S18) or C.O.D. (S19), the automated system sends the necessary instructions for such type of purchases (S20, S21) and the purchase is completed (S27). If the user chooses payment by a credit card, the automated system instructs the user to scan the bar coded account number on the credit card (S22). When the decoded account number is received, the automated system confirms the account number (S23). Once confirmed, the user can hang up the telephone to complete the purchase (S27), and the order will process by the mail-order company to deliver the ordered items after payment.

If there is an error (S24), the automated system instructs the user to re-scan the account number or if desired, manually enter the account number on the telephone keypad (S22). Further, the user can change the method of payment (S17). After a predetermined number of errors (S24), the automated systems asks the user whether he/she desires to talk to a representative or to terminated the order (S25). If the representative is able to help process the order (S25A), the order can be completed (S27), and the connection is terminated. If the user does not want to talk to a representative or the representative is not able to help, the user can hang up to terminate the order (S26).

As can be appreciated, during the entire ordering process, the controller conveys the instructions of the automated system to the user using the receiver and/or the display of the telephone set. Further, the scanned and decoded bar code information can be displayed for confirmation. A printer can be also attached as an additional output device to print out a hard copy of the order. Moreover, the enter and cancel buttons on the keypad can be used to send and correct scanned information to the automated system. Alternatively, the automated system can instruct the user to confirm the scanned information prior to sending the decoded bar code information.

The optical scanner in the handset can be used to track of inventory location. Clerks can "read" the inventory using the optical scanner of the handset by scanning a bar coded serial number on each piece of inventory to enter the location and status of the piece. (Rather than using a separate computer system, the location and status of the inventory can be processed by a PBX, which has its own computer system.)

The present arrangement can be used in business to keep track of inventory and sales. For example, in a retail store, a separate bar code reader may be provided to enter the bar coded labels of merchandise during purchase, and a separate computer system used to keep track of inventory and sale. With the present arrangement, the telephone set can be coupled to the cash register, and the bar coded label scanned by the optical scanner of the handset. Moreover, a local PBX computer may be used to keep track of the sales and inventory. At the end of the business day, the local PBX computer can transmit the sales and inventory information to the main computer at the headquarters of the retail store.

### Remote Controller arrangements

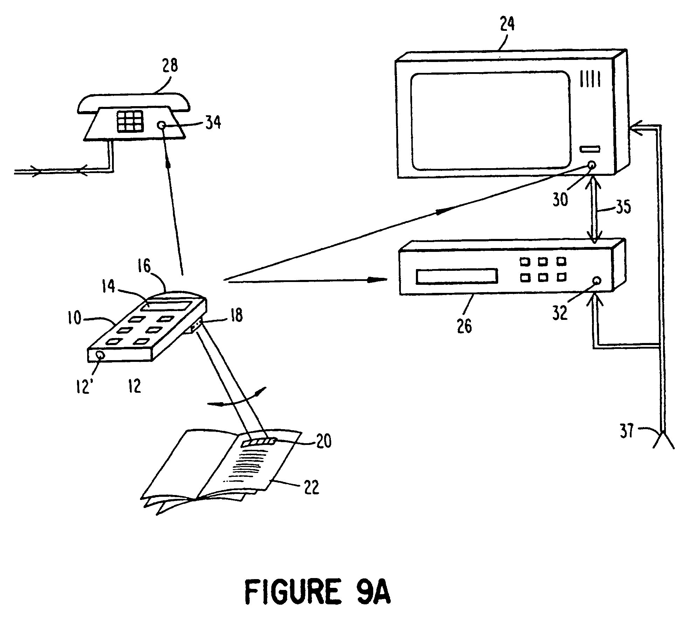

Turning first to Figure 9A, there is shown a portable remote controller 10 having a standard keyboard 12, display 14, and infra-red signal transmitter 16. The remote controller 10 of Figure 9A does not fall within the scope of the method according to the invention. The remote controller further includes an integral bar code scanner 18 enabling a user to scan bar code symbols 20 printed in a TV guide or other magazine 22. In an alternative arrangement shown) the bar code scanner 18 could be connected to rather than integral with the remote controller 10.

The infra-red transmitter 16 is arranged to send infra-red control signals to a television 24, a VCR 26 and a telephone 28, where the signals are picked up by respective infra-red detectors 30,32,34. The television and the VCR are connected by appropriate wiring 35, and both receive signals via a common aerial 37.

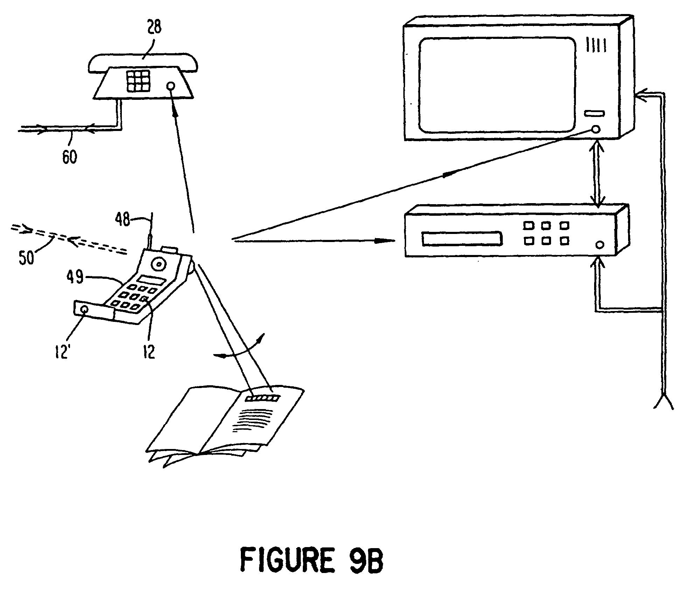

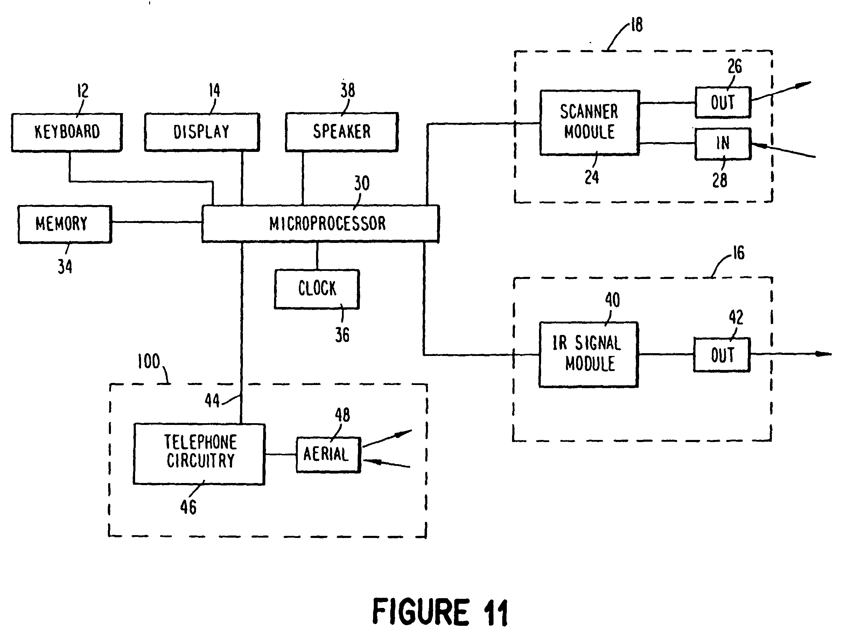

The operation of this system will now be described with reference to Figure 9 and to Figure 11, which is a schematic block diagram of the main features of the remote controller 10. The user selects from the TV guide 22 the program that he wants to watch and scans the corresponding bar code 20 with the bar code scanner 18. As will be seen in Figure 11, the bar code scanner 18 comprises a scanner module 24, along with means 26 for transmitting a scanning light beam and means 28 for receiving light which has been reflected from the bars and spaces of the bar code symbol 20. The bar code symbol is decoded by a microprocessor 30, and the corresponding information stored in a memory 34. Typically, this information will comprise details of the program in question, including the starting time, the finishing time and the channel. Other information such as the name of the program might also be incorporated within the bar code symbol. The information may be shown on the display 14 and may, if necessary, be amended or corrected by the user via the keyboard 12.

Once the information has been stored in the memory, the user then places the remote controller in a convenient location within sight of the TV and the VCR. A clock 36 within the controller produces a real time clock signal, and this is continually polled by the microprocessor 30 and compared with the program start time stored in the memory 34. When the time for the program arrives (or perhaps a predetermined time before the program is due to start) the controller causes a speaker 38 to emit a warning beep to alert the user. If the user answers the beep, by pressing an appropriate key on the keyboard within a given time, the microprocessor actuates the infra-red transmitter 16 which sends a signal to the TV 24, causing the TV to switch itself on and turn to the appropriate channel, so that the user can watch the program. Instead of responding by way of the keyboard 12, a special push-button or key 12' (Figure 9A) may be provides solely for that purpose. On the other hand, if the user does not answer the beep within the allotted time, the microprocessor actuates the infra-red transmitter to send a signal to the VCR instructing the VCR to record the program. The infra-red signal that is sent to the VCR may download the finishing time into the VCR, so that the VCR may automatically switch itself off when the program has finished, or alternatively the controller may send a separate signal to the VCR, at the finishing time, instructing it at that point to turn itself off.

It will be appreciated from the above description that the infra-red transmitter 16 needs to transmit differently coded signals to the television 24 and to the VCR 26. As shown in Figure 11, this may be achieved by means of an infra-red signal module 40, the purpose of which is to encode the signals to be transmitted appropriately, according as they are to be transmitted to the television or to the VCR. The infra-red signal module 40 provides an output signal to a transmitter unit 42 which produces the necessary beam according to the encoded signals it has received. As an alternative to the infra-red signal module 40, the encoding could be carried out by the microprocessor 30.

In the arrangement just described, the items shown in the box 100 in Figure 11 are not present. These will be described below, with reference to an alternative arrangement.

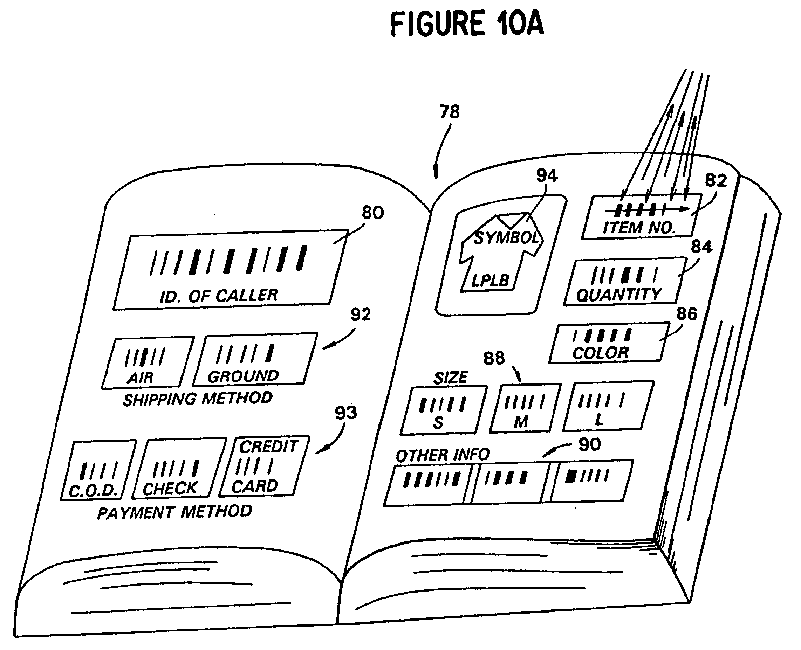

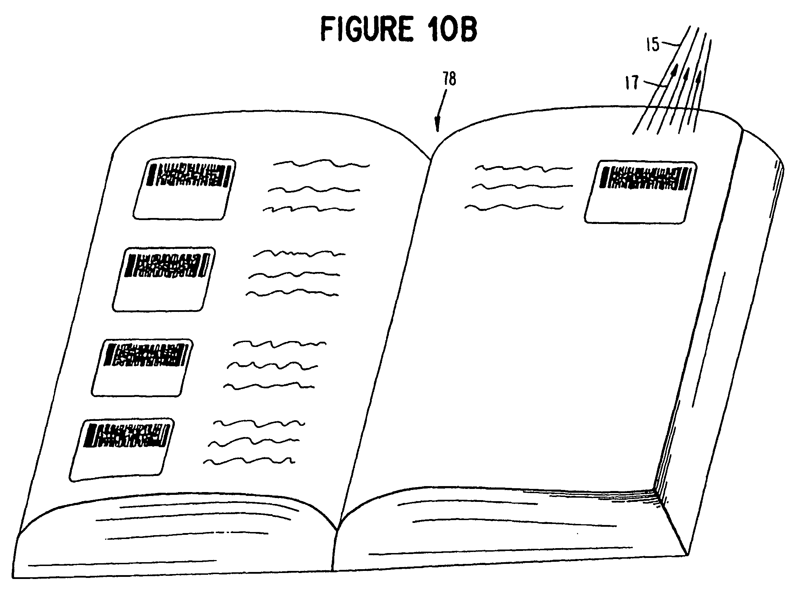

The way in which this arrangement may be used for home shopping will now be described with reference to Figures 9A, 10A and 10B. A promotional item for sale may be bar coded in a magazine 78. The details given may include a photograph or drawing of the item, 94, and bar codes representative of the item number 82, the quantity to be ordered 84, the colour 86, and the size 88. The user may also retain a separate card or a separate sheet containing bar codes representative of the identity of the caller 80, the shipping method to be used 92, and the method of payment 93. All of these bar code symbols may be one-dimensional symbols as shown in Figure 10A, or alternatively two-dimensional symbols as shown schematically in Figure 10B.

At least one bar code 90 encodes additional information about the product, and in the present arrangement that additional information may be details of when the product is to be shown on the "shopping channel". Typically, the bar code symbol will encode at least a starting time for the promotion on the shopping channel, a finishing time, and the channel number. If the user would like a video demonstration of the item, he simply scans the bar code symbol 90 and, at the appropriate time, the program will be recorded automatically for play-back later at the user's convenience.

After playing back the program, the user may decide to order the item, in which case he simply indicates that fact by pressing an appropriate key on the keyboard, and the infra-red transmitter 16 sends an appropriately coded order to the telephone 28. The telephone then calls the supplier, and places the order automatically. This arrangement does not fall within the scope of the method according to the invention.

Where the supplier of the item does not provide any options, as to colour, size and so on, that is all that will be required. Where there are options, however, the user will need to go back to the magazine and scan the appropriate bar codes for the options before pressing a button on the keyboard to instruct the controller to send the coded message to the telephone. The information on the identity of the caller, shown in Figure 10A as bar code symbol 80, will generally not be required as this information can permanently be stored in the memory 34. Similarly, information could permanently be stored on the user's preferences, such as the preferred payment method and the preferred shipping method.

A further embodiment of the invention, in which the controller is incorporated into a portable or mobile telephone hand set 49, is shown in Figure 9B. Details are exactly as described above, except that the controller circuitry shown in Figure 11 now includes the additional items within the box 100, namely telephone circuitry 46 and an aerial 48. The telephone circuitry is connected to the microprocessor 30 by means of a line 44, this line simply replacing the infra-red connection between the controller and the telephone of Figure 9A.

The telephone hand set 49 is preferably a mobile or cellular telephone so that, when an order is to be placed, the information is directly transmitted from the aerial 48 via a radio signal 50 to the pick-up point (not shown) of the cellular telephone network. Alternatively, the handset 49 may be a mobile 'phone, in which case the user will have a corresponding base station 28' in the vicinity. The mobile handset communicates with the base station, and the base station is connected to an external telephone line 60 in the usual way.

## Claims

1. Method of using a communication system (74) for transmitting bar code information by a telephone system (75) to an automated mail-order system (76),
said telephone system (75) comprising at least one telephone set (6A-6C) having an built-in optical scanner (1) for reading bar codes on a printed medium for transmission as bar code information, said communication system (74) comprising a communications network (46) coupling the telephone system (75) and the mail-order system (76), said method comprising the steps of:
(a) using (S₂-S₁₀) said telephone set (6A-6C) to dial the telephone number of a mail-order company providing the mail-order system (76) to establish connection with said automated mail-ordering system;
(b) scanning (S₁₁-S₁₇) bar coded information using the optical scanner (1) incorporated in the telephone set (6A-6C) by aiming a handset (4) of said telephone set (6A-6C) at a bar code symbol (2) from a position in which the optical scanner (1) is spaced from the bar code symbol, and emitting and automatically deflecting a light beam to scan across said bar code;
(c) completing (S27) the purchase by terminating the order.

2. The method of claim 1, wherein said step (a) comprises:
manually dialling (S3) or auto-dialling the telephone number, said auto-dialling comprising scanning a bar coded telephone number.

3. The method of claim 1 or 2, further comprising:
scanning bar coded information in a catalog (78), the catalog (78) having at least one of the following: bar coded telephone numbers, bar coded information (80) identifying the user such as name, address and telephone number, bar coded item number (82), quantity (84), color (86), size (88) and/or other information (90) to identify an item (94) to be purchased, and bar coded shipping method (92) and shipping address, and payment method (93).

4. The method of any of the preceding claims, further comprising the step of:
the automated mail-order system (76) instructing the user, when the connection is established, to enter his or her bar coded identification (80) identifying the user's name, address, telephone number and other information, said bar coded identification (80) being printed on a catalog (78), on a driver's license, or on a business card.

5. The method of any of the preceding claims, further comprising the step of:
the automated mail-order system (76) instructing the user to scan the bar coded item number (82), quantity (84), color (86), size (88) and/or other information (90) identifying the item (94) to be purchased.

6. The method of any of the preceding claims, further comprising the steps of:
the automated mail-order system (76) instructing the user to indicate, after the decoded bar code information is received, whether the order is complete (S13);
when it is desired to order another item, scanning the bar coded information of other items (S12); and
repeating the above sequence until the user indicates to the automated mail-order system (76) that the order is complete.

7. The method of any of the preceding claim, further comprising the step of:
the automated mail-order system instructing (S14) the user to enter the bar coded shipping method (92).

8. The method of any of the preceding claims, further comprising the steps of:
the automated mail-order system (76) asking whether the shipping address is the same as the user identification information (S15), and if not, instructing either to manually enter the shipping address or scan a bar coded shipping address (S16).

9. The method of any of the preceding claims, further comprising the steps of:
the automated mail-order system (76) transmitting the total amount of the purchase and instructs the user to scan the bar coded payment method (93), and
if the user scans either payment by check (S18) or C.O.D. (S19), the automated mail-order system (76) sends the necessary instructions for such type of purchases (S20, S21) and the purchase is completed (S27), or
if the user chooses payment by a credit card, the automated mail-order system (76) instructs the user to scan a bar coded account number on a credit card (S22), and, when the decoded account number is received, the automated mail-order system (76) confirms the account number (S23).

10. The method of claim 9, further comprising the steps of:
in case of an error (S24), the automated mail-order system (76) instructing the user to re-scan the account number or if desired, manually enter the account number on the telephone keypad (S22) or to change the method of payment (S17).

11. The method of claim 10, further comprising the steps of:
after a predetermined number of errors (S24), the automated mail-order system (76) asking the user whether he/she desires to talk to a representative or to terminate the order (S25).

12. The method of any of the preceding claims, further comprising the step of:
displaying the scanned and decoded bar code information for confirmation.

13. The method of any of the preceding claims, further comprising the steps of:
using enter and cancel buttons on a keypad of the telephone set (6A-6C) to send and correct scanned information to the automated mail-order system (76).

14. The method of any of the preceding claim, further comprising the step of:
the automated mail-order system (76) instructing the user to confirm the scanned information prior to sending the decoded bar code information.

15. The method of any of the preceding claims, wherein said step (b) comprises:
(i) detecting the light beam reflected back from the bar code and producing corresponding electrical signals, and
(ii) converting the electrical signals into decoded bar code information.

16. The method of claim 15, wherein said converting step comprises:
decoding the electrical signals digitized by digitizing means into decoded bar code information.

17. The method of any of the preceding claims, further including the steps of:
storing, in the telephone set (6A-6C), decoded bar code information, telephone numbers or programs for executing commands input into the telephone set (6A-6C);
receiving telephone numbers and commands by a keypad (58) of the telephone set (6A-6C);
transmitting audio signals and decoded bar code information to and receiving communication signals from the communication system (74) with the telephone set (6A-6C).

18. The method of any of the preceding claims, wherein step (c) includes terminating the connection.

## Patentansprüche

1. Verfahren der Verwendung eines Kommunikationssystems (74) zum Übertragen von Strichcodeinformation durch eine Telephonsystem (75) zu einem automatisierten Versandsystem (76),
wobei das Telephonsystem (75) mindestens ein Telephongerät (6A-6C) aufweist, welches einen eingebauten optischen Scanner (1) besitzt zum Lesen von Strichcodes auf einem gedruckten Medium, und zwar zur Übertragung als Strichcodeinformation, wobei das Kommunikationssystem (74) ein Kommunikationsnetzwerk (46) aufweist, das das Telephonsystem (75) mit dem Versandsystem (76) koppelt, wobei das Verfahren die folgenden Schritte aufweist:
(a) Verwenden (S2-S10) des Telephongeräts (6A-6C) zum Wählen der Telephonnummer eines Versandhandelsunternehmens, welches das Versandsystem (76) vorsieht, um eine Verbindung mit dem automatisierten Versandsystem herzustellen;
(b) Scannen (S11-S17) von strichcodierter Information unter Verwendung des in das Telephongerät (6A-6C) eingebauten optischen Scanners (1) durch Richten eines Handgeräts bzw. Hörers (4) des Telephongeräts (6A-6C) auf ein Strichcodesymbol (2) von einer Position aus, in der der optische Scanner (1) von dem Strichcodesymbol beabstandet bzw. entfernt ist, und Emittieren bzw. Aussenden und automatisches Ablenken eines Lichtstrahls, um über den Strichcode hinweg zu streichen bzw. scannen;
(c) Vervollständigen (S27) des Kaufs durch Beenden der Bestellung.

2. Verfahren nach Anspruch 1, wobei der Schritt (a) folgendes aufweist:
manuelles Wählen (S3) oder automatischen Wählen der Telephonnummer, wobei das automatische Wählen das Scannen einer strichcodierten Telephonnummer aufweist.

3. Verfahren nach Anspruch 1 oder 2, wobei das Verfahren ferner folgendes aufweist:
Scannen von strichcodierter Information in einem Katalog (78), wobei der Katalog (78) mindestens eines der folgenden Merkmale aufweist:
strichcodierte Telephonnummern, strichcodierte Information (80), die den Verwender identifiziert, wie beispielsweise Name, Adresse und Telephonnummer, strichcodierte Artikelnummer (82), Menge (84), Farbe (86), Größe (88) und/oder andere Information (90), um einen zu kaufenden Artikel (94) zu identifizieren, und strichcodierte Versandart (92) und Lieferadresse und Zahlungsweise (93).

4. Verfahren nach einem der vorhergehenden Ansprüche, wobei das Verfahren ferner den folgenden Schritt aufweist:
das automatisierte Versandsystem (76) weist nach Herstellung der Verbindung den Verwender an, seine strichcodierte Identifikation (80) einzugeben, wobei die strichcodierte Identifikation (80) den Namen, die Adresse, die Telephonnummer und andere Informationen des Verwenders identifiziert, wobei die strichcodierte Information (80) auf einem Katalog (78), einem Führerschein oder auf einer Visitenkarte aufgedruckt ist.

5. Verfahren nach einem der vorhergehenden Ansprüche, wobei das Verfahren ferner den folgenden Schritt aufweist:
das automatisierte Versandsystem (76) weist den Verwender an, die strichcodierte Artikeinummer (82), Menge (84), Farbe (86), Größe (88) und/oder andere Information (90), die den zu kaufenden Artikel (94) identifiziert, zu scannen.

6. Verfahren nach einem der vorhergehenden Ansprüche, wobei das Verfahren ferner die folgenden Schritte aufweist:
das automatisierte Versandsystem (76) weist den Verwender an, nach dem Empfang der decodierten Strichcodeinformation anzuzeigen, ob die Bestellung vollständig ist (S13);
falls gewünscht wird, einen weiteren Gegenstand zu bestellen, Scannen der Strichcodeinformation von anderen Gegenständen (S12); und Wiederholen der obigen Sequenz, bis der Verwender dem automatisierten Versandsystem (76) anzeigt, daß die Bestellung vollständig ist.

7. Verfahren nach einem der vorhergehenden Ansprüche, wobei das Verfahren ferner den folgenden Schritt aufweist:
das automatisierte Versandsystem weist den Verwender an (S14), die strichcodierte Versandart (92) zu scannen.

8. Verfahren nach einem der vorhergehenden Ansprüche, wobei das Verfahren ferner die folgenden Schritte aufweist:
das automatisierte Versandsystem (76) fragt, ob die Lieferadresse dieselbe ist wie die Verwenderidentifikationsinformation (S15), und falls nicht, weist es an, entweder die Lieferadresse manuell einzugeben oder eine strichcodierte Lieferadresse zu scannen (S16).

9. Verfahren nach einem der vorhergehenden Ansprüche, wobei das Verfahren ferner die folgenden Schritte aufweist:
das automatisierte Versandsystem (76) überträgt die Gesamtsumme des Kaufs und weist den Verwender an, die strichcodierte Zahlungsweise (93) zu scannen, und
wenn der Verwender entweder Zahlung per Scheck (S18) oder per Lastschrifteinzug (S19) scannt, schickt das automatisierte Versandsystem (76) die notwendigen Anweisungen für derartige Käufe (S20, S21) und der Kauf ist vollständig (S27), oder
falls der Verwender Zahlung per Kreditkarte wählt, weist das automatisierte Versandsystem (76) den Verwender an, eine strichcodierte Kontonummer auf einer Kreditkarte zu scannen (S22), und wenn die decodierte Kontonummer empfangen wurde, bestätigt das automatisierte Versandsystem (76) die Kontonummer (S23).

10. Verfahren nach Anspruch 9, wobei das Verfahren ferner die folgenden Schritte aufweist:
im Falle eines Fehlers (S24) weist das automatisierte Versandsystem (76) den Verwender an, die Kontonummer erneut zu scannen, oder, falls gewünscht, die Kontonummer manuell auf dem Telephontastenfeld einzugeben (S22) oder die Zahlungsweise zu ändern (S17).

11. Verfahren nach Anspruch 10, wobei das Verfahren ferner die folgenden Schritte aufweist:
nach einer vorbestimmten Anzahl von Fehlern (S24) fragt das automatisierte Versandsystem (76) den Verwender, ob er mit einem Mitarbeiter sprechen möchte oder die Bestellung beenden möchte (S25).

12. Verfahren nach einem der vorhergehenden Ansprüche, wobei das Verfahren ferner den folgenden Schritt aufweist:
Anzeigen der gescannten und decodierten Strichcodeinformation zur Bestätigung.

13. Verfahren nach einem der vorhergehenden Ansprüche, wobei das Verfahren ferner die folgenden Schritte aufweist:
Verwenden der Eingabe- und Löschtasten auf einem Tastenfeld des Telephongeräts (6A-6C), um gescannte Information an das automatisierte Versandsystem (76) zu senden bzw. zu korrigieren.

14. Verfahren nach einem der vorhergehenden Ansprüche, wobei das Verfahren ferner den folgenden Schritt aufweist:
das automatisierte Versandsystem (76) weist den Verwender an, die gescannte Information zu bestätigen, bevor die decodierte Strichcodeinformation gesendet wird.

15. Verfahren nach einem der vorhergehenden Ansprüche, wobei der Schritt (b) folgendes aufweist:
(i) Detektieren des von dem Strichcode reflektierten Lichtstrahls und Erzeugen entsprechender elektrischer Signale; und
(ii) Umwandeln der elektrischen Signale in decodierte Strichcodeinformationen.

16. Verfahren nach Anspruch 15, wobei der Umwandlungsschritt folgendes aufweist:
Decodieren der durch Digitalisiermittel digitalisierten elektrischen Signale in decodierte Strichcodeinformationen.

17. Verfahren nach einem der vorhergehenden Ansprüche, wobei das Verfahren ferner die folgenden Schritte aufweist:
Speichern von decodierten Strichcodeinformationen, Telephonnummern oder von in das Telephongerät (6a-6C) eingegebenen Programmen zur Ausführung von Befehlen in dem Telephongerät (6A-6C);
Empfangen von Telephonnummern und Befehlen über ein Tastenfeld (58) des Telephongeräts (6A-6C);
Übertragen von Audiosignalen und decodierter Strichcodeinformation an das Kommunikationssystem (74) und Empfangen von Kommunikationssignalen von dem Kommunikationssystem (74) mit dem Telephongerät (6A-6C).

18. Verfahren nach einem der vorhergehenden Ansprüche, wobei der Schritt (c) das Beenden der Verbindung umfasst.

## Revendications

1. Procédé d'utilisation d'un système de communication (74) pour transmettre des informations de code à barres par un système téléphonique (75) vers un système automatique de commande par courrier (76) ;
le système téléphonique (75) comprenant au moins un poste téléphonique (6A-6C) comprenant un analyseur optique incorporé (1) pour lire des codes à barres sur un milieu imprimé pour émission en tant qu'informations de codes à barres, le système de communication (74) comprenant un réseau de communication (46) couplant le système téléphonique (75) et le système de commande par courrier (76), le procédé comprenant les étapes suivantes :
(a) utiliser (S2-S10) le poste téléphonique (6A-6C) pour former le numéro de téléphone d'une société de commande par courrier fournissant le système de commande par courrier (76) pour établir une communication avec le système automatique de commande par courrier ;
(b) analyser (S11-S17) des informations de code à barres en utilisant un analyseur optique (1) incorporé dans le poste téléphonique (6A-6C) en visant au moyen d'un combiné (4) du poste téléphonique (6A-6C) un symbole de code à barres (2) à partir d'une position dans laquelle l'analyseur optique (1) est espacé du symbole de code à barres, et émettre et défléchir automatiquement un faisceau lumineux pour analyser par balayage le code à barres ;
(c) finaliser (S27) l'achat en terminant la commande.

2. Procédé selon la revendication 1, dans lequel l'étape (a) comprend :
former manuellement (S3) ou automatiquement le numéro de téléphone, la numérotation automatique comprenant le balayage d'un numéro téléphonique codé par code à barres.

3. Procédé selon la revendication 1 ou 2, comprenant en outre :
balayer l'information codée par code à barres dans un catalogue (78), le catalogue (78) comprenant au moins l'un des éléments suivants : des numéros de téléphone codés par code à barres, une information codée par code à barres (80) identifiant l'utilisateur tel qu'un nom, une adresse et un numéro de téléphone, un numéro de produit codé par code à barres (82), une quantité (84), une couleur (86), une dimension (88) et/ou autre information (90) pour identifier un produit (94) à acheter, et un procédé d'expédition codé par code à barres (92) et une adresse d'expédition, et un procédé de paiement (93).

4. Procédé selon l'une quelconque des revendications précédentes, comprenant en outre l'étape suivante :
amener le système automatique de commande par courrier (76) à donner instruction à l'utilisateur quand la connexion est établie pour qu'il introduise son identification codée par code à barres (80) identifiant le nom d'utilisateur, l'adresse, le numéro de téléphone et autres informations, l'identification codée par code à barres (80) étant imprimée sur un catalogue (78), sur un permis de conduire, ou sur une carte de crédit.

5. Procédé selon l'une quelconque des revendications précédentes, comprenant en outre l'étape suivante :
amener le système automatique de commande par courrier (76) à donner instruction à l'utilisateur de balayer le numéro de produit codé par code à barres (82), la quantité (84), la couleur (86), la dimension (88) et/ou autre information (90) identifiant le produit (94) à acheter.

6. Procédé selon l'une quelconque des revendications précédentes, comprenant en outre les étapes suivantes :
amener le système automatique de commande par courrier (76) à donner instruction à l'utilisateur d'indiquer, après que l'information de code à barres décodée a été reçue, de ce que l'ordre est achevée ou non (S13) ;
quand on souhaite commander un autre produit, balayer l'information codée par code à barres d'autres produits (S12) ; et
répéter la séquence ci-dessus jusqu'à ce que l'utilisateur indique au système automatique de commande par courrier (76) que la commande est achevée.

7. Procédé selon l'une quelconque des revendications précédentes, comprenant en outre l'étape suivante :
amener le système automatique de commande par courrier à donner instruction (S14) à l'utilisateur d'introduire le procédé d'expédition codé par code à barres (92).

8. Procédé selon l'une quelconque des revendications précédentes, comprenant en outre les étapes suivantes :
amener le système automatique de commande par courrier (76) à demander si l'adresse d'expédition est la même que les informations d'identification d'utilisateur (S15) et, sinon, donner instruction ou bien d'introduire manuellement l'adresse d'expédition ou bien de balayer une adresse d'expédition codée par code à barres (S16).

9. Procédé selon l'une quelconque des revendications précédentes, comprenant en outre les étapes suivantes :
amener le système automatique de commande par courrier (76) à émettre la quantité totale de l'achat et à donner instruction à l'utilisateur de balayer le mode de paiement codé par code à barres (93) ; et
si l'utilisateur balaie le paiement par chèque (S18) ou par C.O.D. - paiement à la livraison - (S19), le système automatique de commande par courrier (76) envoie les instructions nécessaires pour ce type d'achat (S20, S21) et l'achat est parachevé (S27), ou
si l'utilisateur choisit un paiement par carte de crédit, le système automatique de commande par courrier (76) demande à l'utilisateur d'analyser un numéro de compte codé par code à barres sur la carte de crédit (S22) et, quand le numéro de compte décodé est reçu, le système automatique de commande par courrier (76) confirme le numéro de compte (S23).

10. Procédé selon la revendication 9, comprenant les étapes suivantes :
en cas d'erreur (S24), le système automatique de commande par courrier (76) demande à l'utilisateur de balayer le numéro de compte ou, s'il le souhaite, d'introduire manuellement le numéro de compte sur le clavier téléphonique (S22) et de changer le mode de paiement (S17).

11. Procédé selon la revendication 10, comprenant en outre les étapes suivantes :
après un nombre prédéterminé d'erreurs (S24), le système automatique de commande par courrier (76) demande à l'utilisateur s'il désire parler à un représentant ou terminer la commande (S25).

12. Procédé selon l'une quelconque des revendications précédentes, comprenant en outre l'étape d'affichage de l'information de code à barres analysée et décodée pour confirmation.

13. Procédé selon l'une quelconque des revendications précédentes, comprenant en outre l'étape suivante :
utiliser des boutons d'introduction et de suppression sur le clavier du poste téléphonique (6A-6C) pour envoyer une information analysée correcte au système automatique de commande par courrier (76).

14. Procédé selon l'une quelconque des revendications précédentes, comprenant en outre l'étape suivante :
le système automatique de commande par courrier (76) demande à l'utilisateur de confirmer l'information analysée avant d'envoyer l'information de code à barres décodée.

15. Procédé selon l'une quelconque des revendications précédentes, dans lequel l'étape (b) comprend :
(i) détecter le faisceau lumineux rétroréfléchi à partir du code à barres et produire des signaux électriques correspondants, et
(ii) convertir les signaux électriques en informations de code à barres décodées.

16. Procédé selon la revendication 15, dans lequel l'étape de conversion comprend :
décoder les signaux électriques numérisés par des moyens de numérisation en informations de code à barres décodées.

17. Procédé selon l'une quelconque des revendications précédentes, comprenant en outre les étapes suivantes :
mémoriser dans le poste téléphonique (6A-6C) l'information de code à barres décodée, des numéros de téléphone ou des programmes pour exécuter des entrées de commande dans le poste téléphonique (6A-6C) ;
recevoir des numéros téléphoniques et des commandes par un clavier (58) du poste téléphonique (6A-6C) ;
émettre des signaux audio et des informations de code à barres décodées et recevoir des signaux de communication du système de communication (74) au moyen du poste téléphonique (6A-6C).

18. Procédé selon l'une quelconque des revendications précédentes, dans lequel l'étape (c) inclut l'achèvement de la connexion.
